# EUROPEAN PATENT APPLICATION

(11) **EP 4 618 359 A1**
(43) Date of publication of application: **17.09.2025**
(21) Application number: 24163274.4
(22) Date of filing: 13.03.2024
(51) Int. Cl.: H02J 7/00, H02M 1/00, H02M 7/49

(54) **AC BATTERY SYSTEM**

(71) Applicant: NXP USA, Inc., Austin, TX 78735 (US)
(72) Inventor: NEWLIN, Trevor Mark, Chandler, AZ 85224 (US)
(74) Representative: Schmütz, Christian Klaus Johannes

(57) **Abstract**

The disclosure relates to an AC battery system, methods for operating such as system and a controller for an AC battery system. Example embodiments include a battery system (100) comprising: a plurality of series-connected battery modules (101a-c), each battery module (101a-c) comprising a plurality of series-connected cells (102a-c), a first switch (103a-c) connected in series with the plurality of cells (102a-c) and a second switch (104a-c) connected in parallel with the plurality of cells (102a-c); an H-bridge circuit (105) connected across the plurality of battery modules (101a-c) and having first and second output terminals (106a, 106b); and a controller (108) configured to control switching of the H-bridge circuit (105) and the first and second switches (103a-c, 104a-c) in each battery module (101a-c) to transfer electrical power between the first and second output terminals (106a, 106b) and the plurality of battery modules (101a-c).

## Description

### Field

The disclosure relates to an AC battery system, methods for operating such a system and a controller for an AC battery system.

### Background

Conventional battery systems comprise arrays of battery cells arranged in series and parallel to provide a DC electrical supply at a desired voltage and current rating. Electrical power may, however, typically be required in the form of an AC supply, for example for domestic or industrial use at 240 or 120V AC or for powering electric motors at varying voltages and frequencies such as for vehicle propulsion. Battery storage systems are therefore typically combined with a power electronics converter configured to convert the DC supply from the battery to a desired AC output power supply. The converter is typically also capable of operating in reverse to convert an AC power supply to a DC supply for charging the battery.

A problem with conventional battery systems, particularly for high power applications, is the need for high-cost and high-power switching components to convert between AC and DC supplies. Such components may for example need to be based on SiC-based semiconductor technology. A further problem relates to the need for many individual cells to be used in combination to provide the required power supply. If any individual cell or group of cells fails, this can lead to failure of the entire battery.

An alternative type of electrical battery storage system is known as an AC battery. As with a DC battery, an AC battery comprises many individual cells, which are arranged in series and parallel to provide an output power supply. However, instead of using a converter connected to the battery to provide AC:DC power conversion, semiconductor switches are provided that are selectively controlled to switch each battery module to adjust the output supply to provide a desired AC supply directly from the battery itself. This can provide a greater degree of flexibility in terms of the ability to select battery modules based on their charging state and, if necessary, their fault state. The battery can also be charged directly from an AC supply by operating the switching arrangement synchronously with the AC supply.

A problem with existing AC battery systems is the need for many switches to be used, typically high current FET switches. To enable the battery to output an AC supply, each battery module will require at least four switches so that the output can be switched to provide either a positive or negative output and to connect or bypass the module. This makes existing AC battery systems more costly and results in an increased FIT (failure in time) measure due to the increased possibility of failure of one or more of the switches as their number increases.

### Summary

According to a first aspect there is provided a battery system comprising:
a plurality of series-connected battery modules, each battery module comprising a plurality of series-connected cells, a first switch connected in series with the plurality of cells and a second switch connected in parallel with the plurality of cells;
an H-bridge circuit connected across the plurality of battery modules and having first and second output terminals; and
a controller configured to control switching of the H-bridge circuit and the first and second switches in each battery module to transfer electrical power between the first and second output terminals and the plurality of battery modules.

The controller may be configured to supply a control signal to each of the plurality of battery modules to open or close the first switch and respectively close or open the second switch.

The controller may be configured to transfer DC electrical power from the plurality of battery modules to AC electrical power at the first and second output terminals over each successive AC cycle by:
providing a first series of control signals to the first and second switches in the plurality of battery modules to provide a first varying supply to the H-bridge circuit over a first half cycle while the H-bridge circuit connects the first and second output terminals across the plurality of battery modules in a first sense; and
providing a second series of control signals to the first and second switches in the plurality of battery modules to provide a second varying supply to the H-bridge circuit over a second half cycle while the H-bridge circuit connects the first and second output terminals across the plurality of battery modules in a second opposite sense,
wherein the controller is configured to switch the H-bridge circuit from the first sense to the second sense between the first and second half-cycles.

The first and second series of control signals may be the same.

The first and second switches may be FET switches.

A winding of an electrical machine may be connected between the first and second output terminals.

Each of the plurality of battery modules may comprise a control input connected to the first switch via a non-inverting amplifier and to the second switch via a first inverting amplifier.

Each of the plurality of battery modules may comprise a third switch connected to the control input via a second inverting amplifier.

According to a second aspect there is provided a method of operating a battery system according to the first aspect, the method comprising:
the controller providing a first series of control signals to the first and second switches in the plurality of battery modules to provide a first varying supply to the H-bridge circuit over a first half cycle while the H-bridge circuit connects the first and second output terminals across the plurality of battery modules in a first sense; and
the controller providing a second series of control signals to the first and second switches in the plurality of battery modules to provide a second varying supply to the H-bridge circuit over a second half cycle while the H-bridge circuit connects the first and second output terminals across the plurality of battery modules in a second opposite sense,
wherein the controller switches the H-bridge circuit from the first sense to the second sense between the first and second half-cycles.

The first and second series of control signals may be the same.

The controller may supply a control signal to each of the plurality of battery modules to open or close the first switch and respectively close or open the second switch.

Each of the plurality of battery modules may comprise a control input connected to the first switch via a non-inverting amplifier and to the second switch via a first inverting amplifier.

According to a third aspect there is provided a controller for a battery system according to the first aspect, the controller configured to:
provide a first series of control signals to the first and second switches in the plurality of battery modules to provide a first varying supply to the H-bridge circuit over a first half cycle while the H-bridge circuit connects the first and second output terminals across the plurality of battery modules in a first sense; and
provide a second series of control signals to the first and second switches in the plurality of battery modules to provide a second varying supply to the H-bridge circuit over a second half cycle while the H-bridge circuit connects the first and second output terminals across the plurality of battery modules in a second opposite sense,
wherein the controller is configured to switch the H-bridge circuit from the first sense to the second sense between the first and second half-cycles.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic circuit diagram of an example battery system;
Figure 2 is a further schematic circuit diagram of an exemplary battery system of the type illustrated in Figure 1;
Figure 3 is a circuit diagram of an example battery module for the battery system of Figure 2;
Figure 4 is a schematic diagram of an example three-phase battery system connected to windings of a three-phase electrical machine;
Figure 5 is a schematic plot of output voltages and switching sequences for the example battery system of Figure 4;
Figure 6 is a schematic diagram of an example three-phase battery system connected to windings of a three-phase electrical machine and with an auxiliary battery charging system; and
Figure 7 is a flow diagram illustrating a series of operations performed by an example controller of a battery system.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

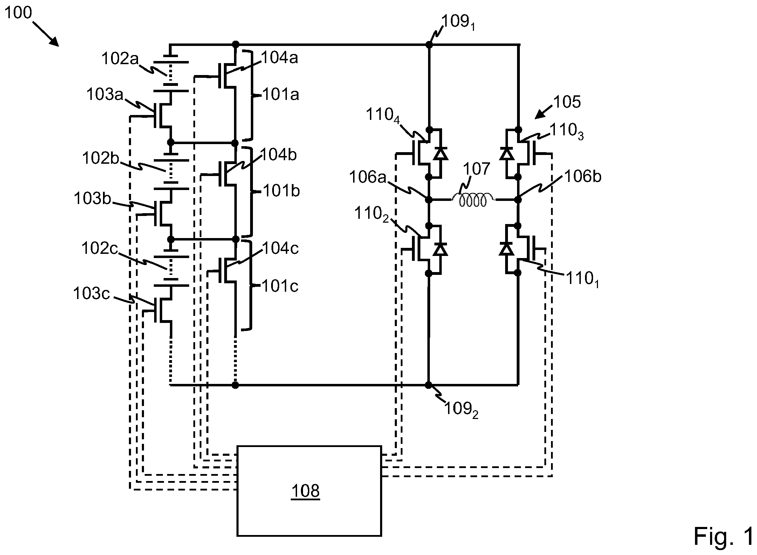

Figure 1 is a schematic diagram of an example battery system 100. The battery system 100 comprises a plurality of series-connected battery modules 101a-c, an H-bridge circuit 105 and a controller 108. Each battery module 101a-c comprises a plurality of series-connected cells 102a-c, a first switch 103a-c that is connected in series with the plurality of cells 102a-c and a second switch 104a-c that is connected in parallel with the plurality of cells 102a-c. Each of the first and second switches 103a-c, 104a-c may be a FET switch.

The H-bridge circuit 105 is connected across the plurality of battery modules 101a-c between first and second battery terminals 109₁, 109₂. First and second output terminals 106a, 106b of the H-bridge circuit 105 are provided for connection to a winding 107 of an electrical machine. The battery modules 101a-c and H-bridge circuit 105 may form part of a multi-phase battery system having further similarly arranged battery modules and H-bridges, as described further below.

The controller 108 is configured to control switching of the H-bridge circuit 105 and of the first and second switches 103a-c, 104a-c in each battery module 101a-c to transfer electrical power between the electrical machine winding 107 and the plurality of battery modules 101a-c. Transfer of electrical power may be from the battery modules 101a-c to the winding 107 to power the electrical machine operating as a motor or may be from the winding 107 to the battery modules 101a-c when the electrical machine is operating as a generator. The first and second output terminals 106a, 106b may alternatively be connected to another type of AC power load or generator.

The H-bridge circuit 105 comprises first, second, third and fourth switches 110₁₋₄, illustrated in this example as MOSFETs with a reverse-biased diode connected across each MOSFET indicated. The switches 110₁₋₄ may alternatively be provided by IGBTs. The controller 108 operates the H-bridge circuit 105 to open and close the switches 110₁₋₄ to connect and disconnect the battery modules 101a-c from the output terminals 106a, 106b. The controller 108 selects the polarity of the connection to the output terminals 106a, 106b by, in a first sense, selecting the first and fourth switches 110₁, 110₄ to be open while the second and third switches 110₂, 110₃ are closed and, in a second sense, selecting the first and fourth switches 110₁, 110₄ to be closed while the second and third switches 110₂, 110s are open.

To transfer electrical power from the plurality of battery modules 101a-c to the output terminals 106a, 106b, the controller 108 selectively controls switching of the first and second switches 103a-c, 104a-c of each of the battery modules 101a-c. In the example illustrated in Figure 1, three battery modules 101a-c are illustrated for simplicity, while in practice more battery modules connected in series may be used to allow a higher voltage output and to allow finer control of the DC voltage across the battery terminals 109₁, 109₂.

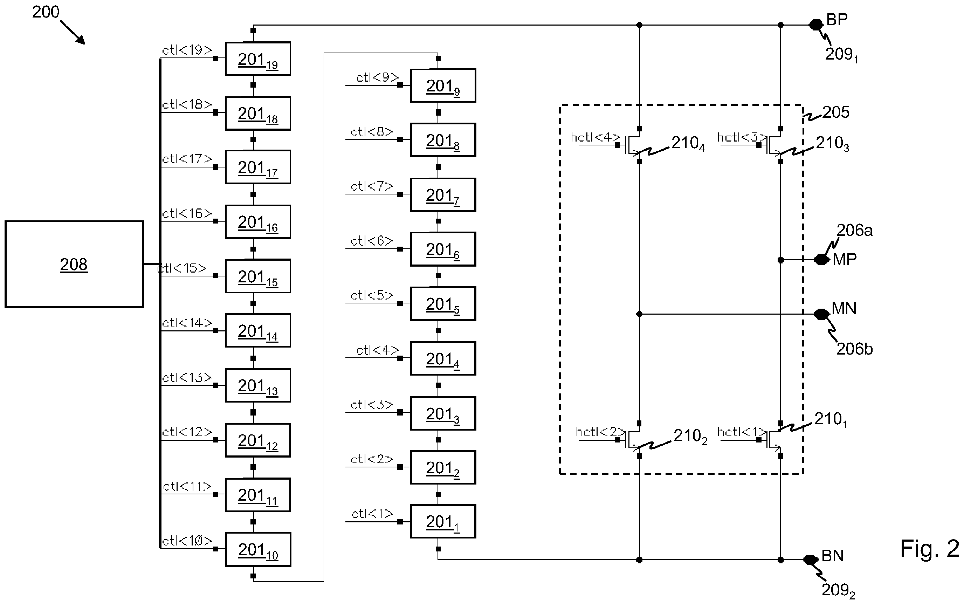

Figure 2 illustrates an example battery system 200 comprising 19 individual battery modules 201₁₋₁₉, each of which may be similar to the battery modules 101a-c in Figure 1. A similar H-bridge circuit 205 is connected between the battery terminals 209₁, 209₂, which in this case are positive and negative terminals BP, BN. The output terminals 206a, 206b may also be considered positive and negative terminals MP, MN, although operation of the H-bridge circuit 205 can switch the polarity of the output terminals 206a, 206b.

The controller 208 provides control signals ctl<1>-ctl<19> to each of the battery modules 201₁₋₁₉ to selectively switch or bypass each of the modules and provides control signals hctl<1>-hctl<4> to the H-bridge circuit switches 210₁₋₄. to connect the battery terminals 209₁, 209₂ in either a positive or negative sense to the output terminals 206a, 206b.

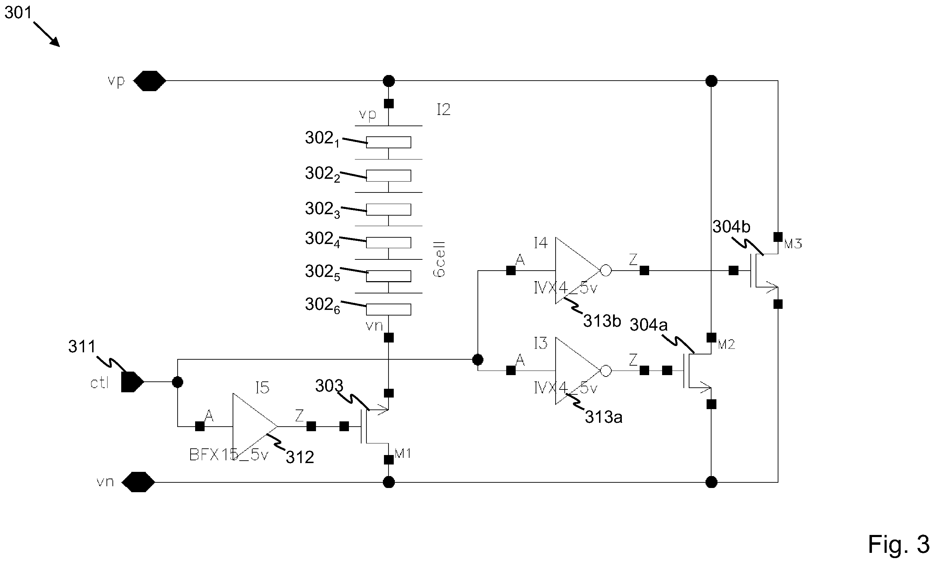

Figure 3 illustrates an example battery module 301 that may constitute one of the battery modules 101a-c, 201₁₋₁₉ in Figures 1 and 2. A series-connected arrangement of such battery modules 301 may be made by connecting positive and negative terminals vp, vn to other similar battery modules. The battery module 301 comprises a plurality of cells 302₁₋₆, with six cells being indicated in this example. A first switch 303 is connected in series with the plurality of cells 302₁₋₆. A second switch 304a is connected in parallel with the plurality of cells 302₁₋₆. A third switch 304b may also be provided that is also connected in parallel with the plurality of cells 302₁₋₆. The third switch 304b may be provided in case of failure of the second switch 304a so that a reliable short circuit to bypass the cells 302₁₋₆ can be made.

Operation of both switches 303, 304a (and also the third switch 304b if provided) is controlled by a control signal ctl at a control input 311. The control signal ctl is provided to the first switch 303 via a non-inverting amplifier 312 and is provided to the second switch 304a (and third switch 304b) via inverting amplifiers 313a, 313b. Therefore, when the control signal ctl closes the first switch 303, the second and third switches 304a, 304b are open and when the control signal ctl opens the first switch 303, the second and third switches 304a, 304b are closed.

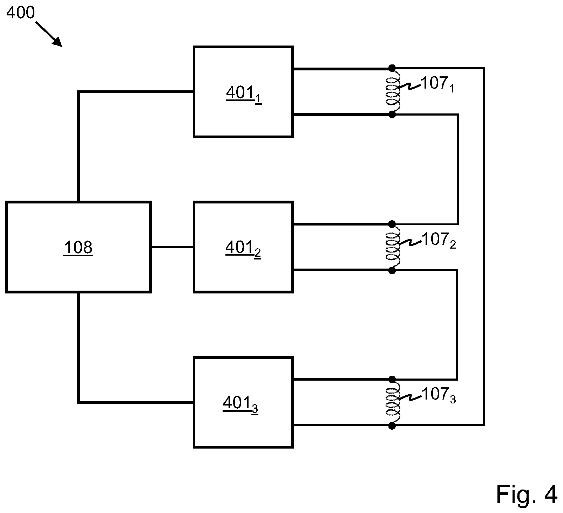

Figure 4 illustrates schematically a battery system 400 with a controller 108 connected to three AC batteries 401₁₋₃, each of which comprises a plurality of battery modules and H-bridge circuit as described above in relation to Figure 1. The output terminals of each of the AC batteries 401₁₋₃ is connected across a respective winding 107₁₋₃ of a three-phase electrical machine. The windings 107₁₋₃ are connected to each other in a delta arrangement. In alternative implementations a star arrangement may be used, both types of connection arrangements being known to the skilled person.

The controller 108 controls switching of the first and second switches in each of the battery modules in the AC batteries 4011-3 and the switches of the H-bridge circuits in the AC batteries 401₁₋₃ to cause currents of appropriate magnitude and phase to pass through each of the windings 107₁₋₃. The magnitude and phase of the currents are controlled by the number of battery modules that are connected to, or bypassed from, the H-bridge circuit in each of the AC batteries 401₁₋₃.

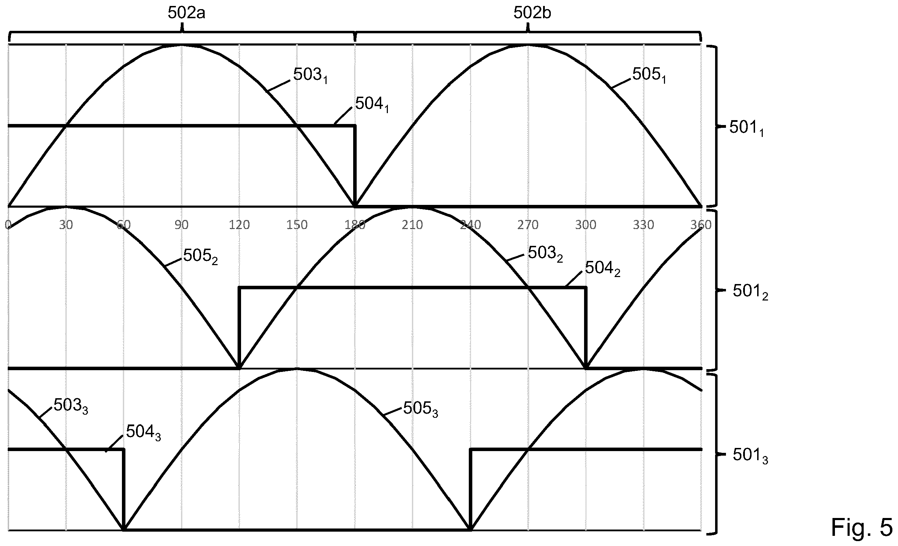

Figure 5 illustrates an example plot of voltage against phase across the battery terminals of each of the AC batteries 401₁₋₃ of Figure 4. Three time-varying voltage supplies 503₁₋₃, 505₁₋₃ are illustrated, together with corresponding control signals 504₁₋₃. Considering just the first phase signals 501₁, a first series of control signals is provided to the first and second switches 103a-c, 104a-c in the plurality of battery modules 101a-c to provide a first varying supply 503₁ over a first half cycle 502a while the H-bridge circuit 105 connects the first and second output terminals 106a, 106b across the plurality of battery modules 101a-c in a first sense (e.g. positive), the switching control for this being indicated in this example by the control signal 504₁ being high. A second series of control signals is provided to the first and second switches 103a-c, 104a-c in the plurality of battery modules 101a-c to provide a second varying supply 505₁ over a second half cycle 502b while the H-bridge circuit 105 connects the first and second output terminals 106a, 106b across the plurality of battery modules 101a-c in a second opposite sense (e.g. negative), the switching control for this being indicated in this example by the control signal 504₁ being low. The effect of this is to invert the second varying supply 505₁ across the output terminals 106a, 106b, providing the negative half of each full AC cycle. Corresponding control signals 504₂, 504₃ are provided to the second and third phases 501₂, 501₃ to provide corresponding first supplies 503₂, 503s and second supplies 505₂, 505₃, with the second supplies being inverted by control signals 504₂, 504s in the second half of each cycle. A three-phase motor can thereby by powered by the AC batteries, with the phases being operated at 120 degree phase differences.

The controller 108 is configured to switch the H-bridge circuit between positive and negative connections between the battery terminals and output terminals only when the voltage across the battery terminals is zero or close to zero, i.e. within the predetermined band around zero. This allows the switching losses from the H-bridge circuit to be minimised, resulting in only conduction losses during each half-cycle. By switching the polarity of the H-bridge each half-cycle, the number of switches required in each battery module can be reduced from the usual minimum of four or five to a minimum of only two or three, thereby saving substantially on cost and reducing the FIT value for the overall battery system. A further advantage is that no voltage is present on the battery terminals when the battery system is not operational, since the switches in the battery modules will all be open, providing a safe state when the battery system is inactive.

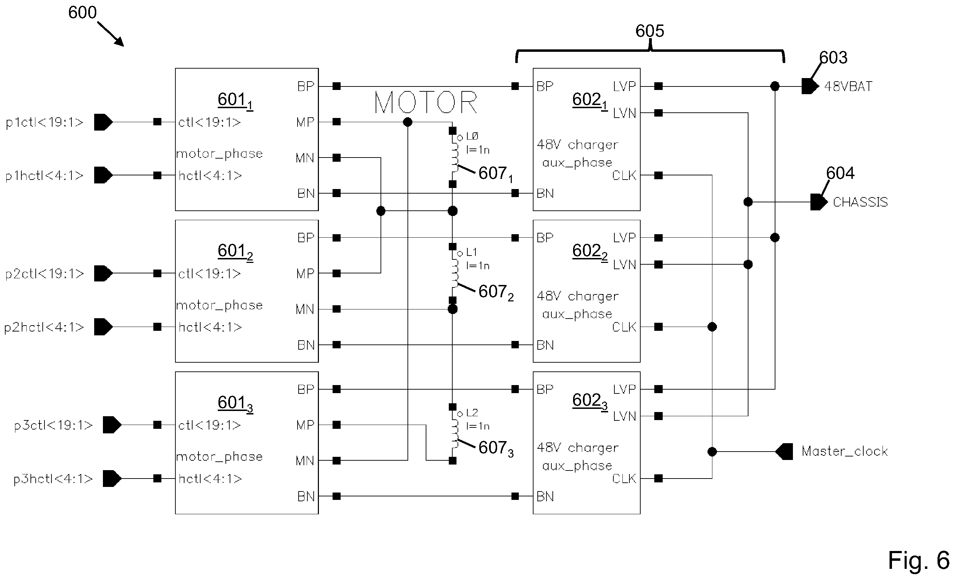

An example three-phase battery system 600 for a vehicle application incorporating three AC batteries 601₁₋₃ and an auxiliary battery charging system 605 is illustrated in Figure 6. The AC batteries 601₁₋₃ operate under control of control signals p1ctl<19:1>, p1hctl<4:1> for control of the battery modules and H-bridge switches respectively of the first AC battery 601₁, control signals p2ctl<19:1>, p2hctl<4:1> for control of the battery modules and H-bridge switches respectively of the second AC battery 601₂, and control signals p3ctl<19:1>, p3hctl<4:1> for control of the battery modules and H-bridge switches respectively of the third AC battery 601₃.

When driving the vehicle, the AC batteries 601₁₋₃ provide power to corresponding windings 607₁₋₃ of a motor. When the motor is stationary, the H-bridge circuit in each AC battery 601₁₋₃ can be opened to disconnect the windings 607₁₋₃ and provide a DC voltage to power an auxiliary battery connected between an auxiliary battery terminal 603 and a chassis terminal 604. Power is transferred to the auxiliary battery via auxiliary charging modules 602₁₋₃ transferring power from each of the three AC batteries to the auxiliary battery terminal 603.

When the motor is running at low power, the H-bridge circuits can be operated using PWM control to allow a DC voltage across the battery modules to be present to both power the motor and to provide charge to the auxiliary battery.

The battery system configuration allows for various fault modes to be detected and, if necessary, overcome or avoided. Various measures may be made on the battery modules, for example by measuring an impedance of each battery module to determine whether a battery module is at fault. A faulty module can be isolated by adjusting the control signals provide to the AC battery to bypass the module while allowing the battery system to continue operation, optionally with a warning flag provided to indicate that repair is required.

In an electric vehicle power application, during normal operation while the motor is running the average battery voltage is typically high enough to allow for an auxiliary battery to be charged. In this situation, the output waveform of each AC battery is a rectified sine wave, which may have a frequency within the range of 20 to 1000 Hz. In a stopped mode, the H-bridge in each AC battery is open to disconnect from the motor. The battery output voltage may be set to around half of full voltage and power provided to charge the auxiliary battery. The batteries may be cycled to ensure that all battery modules are used equally. In a slow running mode, the battery system may be operated at an intermediate voltage in which the output H-bridge may be operated using PWM control at low frequency. The DC voltage used may be set to provide a compromise between efficient motor operation and auxiliary power charging.

In a specific example implementation, a nominal maximum DC voltage for each AC battery is 400V. Using cells with a nominal DC voltage of 3.6V and with 6 cells per module, 19 modules will provide the required maximum voltage. FET switches with an on resistance of around 0.5mΩ may be used for the battery modules. IGBTs may be used for the H-bridge circuit.

When charging the battery system, a 3-pole relay may be used to connect the battery to a common ground. The AC batteries can be switched to match the incoming rectified AC waveform and provide a constant charging current for the battery modules. A secondary relay may be used to isolate the battery from the connector when the motor is connected.

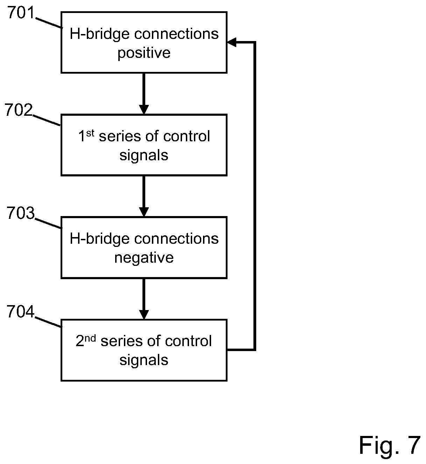

Figure 7 is a schematic flow diagram illustrating a series of operations performed by an example controller for operating a battery system of the type described herein. In a first step 701, the controller operates switches in the H-bridge 105 to connect the battery terminals in a positive sense across the output terminals. In step 702, a first series of control signals is then provided to the plurality of battery modules over a first half cycle. At the end of the first half cycle, at step 703 the controller operates the switches in the H-bridge to connect the battery terminals in a negative sense across the output terminals. In step 704, a second series of control signals is then provided to the plurality of battery modules over a second half cycle. The method then repeats by returning to step 701 for a subsequent cycle. As described above, the H-bridge connections are only switched when the voltage across the output terminals is around zero.

From reading the present disclosure, other variations and modifications will be apparent to the skilled person. Such variations and modifications may involve equivalent and other features which are already known in the art of battery systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A battery system (100) comprising:
a plurality of series-connected battery modules (101a-c), each battery module (101a-c) comprising a plurality of series-connected cells (102a-c), a first switch (103a-c) connected in series with the plurality of cells (102a-c) and a second switch (104a-c) connected in parallel with the plurality of cells (102a-c);
an H-bridge circuit (105) connected across the plurality of battery modules (101a-c) and having first and second output terminals (106a, 106b); and
a controller (108) configured to control switching of the H-bridge circuit (105) and the first and second switches (103a-c, 104a-c) in each battery module (101a-c) to transfer electrical power between the first and second output terminals (106a, 106b) and the plurality of battery modules (101a-c).

2. The battery system (100) of claim 1, wherein the controller (108) is configured to supply a control signal to each of the plurality of battery modules (101a-c) to open or close the first switch (103a-c) and respectively close or open the second switch (104-c).

3. The battery system (100) according to claim 1, wherein the controller (108) is configured to transfer DC electrical power from the plurality of battery modules (101a-c) to AC electrical power at the first and second output terminals (106a, 106b) over each successive AC cycle by:
providing a first series of control signals to the first and second switches (103a-c, 104a-c) in the plurality of battery modules (101a-c) to provide a first varying supply to the H-bridge circuit (105) over a first half cycle (502a) while the H-bridge circuit (105) connects the first and second output terminals (106a, 106b) across the plurality of battery modules (101a-c) in a first sense; and
providing a second series of control signals to the first and second switches (103a-c, 104a-c) in the plurality of battery modules (101a-c) to provide a second varying supply to the H-bridge circuit (105) over a second half cycle (502b) while the H-bridge circuit (105) connects the first and second output terminals (106a, 106b) across the plurality of battery modules (101a-c) in a second opposite sense,
wherein the controller (108) is configured to switch the H-bridge circuit (105) from the first sense to the second sense between the first and second half-cycles (301, 302).

4. The battery system (100) according to claim 3, wherein the first and second series of control signals are the same.

5. The battery system (100) according to any preceding claim, wherein the first and second switches (103a-c, 104a-c) are FET switches.

6. The battery system (100) according to any preceding claim, wherein a winding (107) of an electrical machine is connected between the first and second output terminals (106a, 106b).

7. The battery system (100) according to any preceding claim, wherein each of the plurality of battery modules (101a-c, 301) comprises a control input (311) connected to the first switch (303) via a non-inverting amplifier (312) and to the second switch (304a) via a first inverting amplifier (313a).

8. The battery system (100) of claim 7, wherein each of the plurality of battery modules (101a-c, 301) comprises a third switch (304b) connected to the control input (311) via a second inverting amplifier (313b).

9. A multi-phase battery system (400) comprising a plurality of battery systems according to claim 1, wherein the controller (108) of each battery system is configured to provide switching signals to the battery modules (101a-c) and H-bridge circuit (105) to operate each battery system (100) at a different AC phase.

10. The multi-phase battery system (400) of claim 10, wherein the controller (108) of each battery system (100) is integrated as a common controller (108).

11. A method of operating a battery system (100) according to claim 1, the method comprising:
the controller (108) providing a first series of control signals to the first and second switches (103a-c, 104a-c) in the plurality of battery modules (101a-c) to provide a first varying supply to the H-bridge circuit (105) over a first half cycle (502a) while the H-bridge circuit (105) connects the first and second output terminals (106a, 106b) across the plurality of battery modules (101a-c) in a first sense; and
the controller (108) providing a second series of control signals to the first and second switches (103a-c, 104a-c) in the plurality of battery modules (101a-c) to provide a second varying supply to the H-bridge circuit (105) over a second half cycle (502b) while the H-bridge circuit (105) connects the first and second output terminals (106a, 106b) across the plurality of battery modules (101a-c) in a second opposite sense,
wherein the controller (108) switches the H-bridge circuit (105) from the first sense to the second sense between the first and second half-cycles (301, 302).

12. The method of claim 11, wherein the first and second series of control signals are the same.

13. The method of claim 11 or claim 12, wherein the controller (108) supplies a control signal to each of the plurality of battery modules (101a-c) to open or close the first switch (103a-c) and respectively close or open the second switch (104-c).

14. The method of claim 13, wherein each of the plurality of battery modules (101a-c, 301) comprises a control input (311) connected to the first switch (303) via a non-inverting amplifier (312) and to the second switch (304a) via a first inverting amplifier (313a).

15. A controller (108) for a battery system (100) according to claim 1, the controller (108) configured to:
provide a first series of control signals to the first and second switches (103a-c, 104a-c) in the plurality of battery modules (101a-c) to provide a first varying supply to the H-bridge circuit (105) over a first half cycle (502a) while the H-bridge circuit (105) connects the first and second output terminals (106a, 106b) across the plurality of battery modules (101a-c) in a first sense; and
provide a second series of control signals to the first and second switches (103a-c, 104a-c) in the plurality of battery modules (101a-c) to provide a second varying supply to the H-bridge circuit (105) over a second half cycle (502b) while the H-bridge circuit (105) connects the first and second output terminals (106a, 106b) across the plurality of battery modules (101a-c) in a second opposite sense,
wherein the controller (108) is configured to switch the H-bridge circuit (105) from the first sense to the second sense between the first and second half-cycles (301, 302).
